# EUROPEAN PATENT SPECIFICATION

(11) **EP 3 858 652 B1**
(45) Date of publication and mention of the grant of the patent: **30.11.2022**
(21) Application number: 19845581.8
(22) Date of filing: 12.12.2019
(51) Int. Cl.: B60L 3/00, B62D 5/04, B60L 9/28

(54) **SISTEMA DE ALIMENTACIÓN PARA UN TREN ELÉCTRICO, Y TREN ELÉCTRICO**
STROMVERSORGUNGSSYSTEM FÜR EINEN ELEKTRISCHEN ZUG UND ELEKTRISCHER ZUG
SYSTÈME D'ALIMENTATION POUR UN TRAIN ÉLECTRIQUE ET TRAIN ÉLECTRIQUE

(43) Date of publication of application: 04.08.2021
(73) Proprietor: TECNOLOGICA GOBELAS, A.I.E., 28006 Madrid (ES)
(72) Inventor: ORTEGA RODRIGUEZ, David, 48170 ZAMUDIO (ES); LARRAZABAL BENGOECHEA, Igor, 48170 ZAMUDIO (ES)
(74) Representative: Igartua, Ismael
(86) International application number: PCT/ES2019/070841
(87) International publication number: WO 2021/116505

(56) References cited:
- EP-A1- 3 178 689
- EP-A1- 3 308 996
- CN-A- 107 128 183
- US-A1- 2017 361 716

## Description

### TECHNICAL FIELD

The present invention relates to a power supply system for an electric train, and to an electric train.

### PRIOR ART

Electric trains which are powered mainly through catenaries are known. An electric train is also known to comprise a supporting power supply to enable driving the train when it cannot be powered from the catenary, for example batteries specific for this purpose, super-capacitors, fuel cells, flywheels, or diesel engines.

JP 2011-4566 A describes an auxiliary power supply device for an electric vehicle. The auxiliary power supply device comprises a traction module and an auxiliary module configured for being connected to a catenary through a transformer. The auxiliary module comprises a battery configured for powering the auxiliary loads and the traction module in the absence of power supply from the catenary. The battery is connected to the traction module through the traction transformer.

CN 107128183 A describes an emergency power supply system comprising two traction modules configured for being connected to a catenary through a transformer, the power supply system thereby being configured for receiving power supply from the catenary when the traction modules are connected to said catenary. Each traction module comprises an AC/DC converter the AC side of which is connected to a respective secondary of the transformer. The DC sides of both AC/DC converters are connected to one another, forming a DC bus. Each traction module also comprises a DC/AC converter the AC side of which is configured for powering a pair of traction motors for driving the train and the DC side of which is connected to the DC bus. The power supply system comprises an auxiliary load module comprising a bidirectional DC/AC converter connected to the DC bus, a bidirectional battery charger connected to said bidirectional DC/AC converter, and a battery connected to the bidirectional battery charger. The battery can power the auxiliary loads of the train and the traction motors for driving the train in the absence of power supply from the catenary.

EP3178689A1 describes a railway vehicle including an auxiliary power supply device for converting power supplied from an overhead line; a first storage battery for supplying power to a DC load, and a second storage battery for supplying power to a communication device for external communication. The first storage battery and the second storage battery supply power to the DC load instead of the auxiliary power supply device in a case where power supplied from the overhead line is stopped. The railway vehicle further comprises control means which ensure that, after the power supply is stopped, a power capacity needed to reboot the auxiliary power supply device remains in the first storage battery.

EP3308996A1 describes an auxiliary converter for providing power to auxiliary loads of an auxiliary electrical network of a railway vehicle. The auxiliary converter comprises a main inverter stage with a main inverter input and a main inverter output; a transformer stage connected to the main inverter output and adapted to convert, in a catenary operating mode, the AC voltage from the main inverter stage; and a reversible battery charger stage connected to said charging output and adapted to charge, in said catenary operating mode, an electrical battery of said railway vehicle. The reversible battery charger stage is adapted to, in a battery operating mode, deliver a supply voltage from the battery to said transformer stage for powering auxiliary loads.

US2017/361716A1 describes a power conversion system comprising a transformer, a power conversion device for travel, a power conversion device for auxiliary power sources, and a battery. When the power system does not receive power from the catenary, the battery can power both the power conversion device for travel and the power conversion device for auxiliary power sources. The battery is not galvanically isolated from said converters.

### DISCLOSURE OF THE INVENTION

The object of the invention is to provide a power supply system for an electric train, and an electric train, as defined in the claims.

A first aspect of the invention relates to a power supply system for an electric train.

The power supply system comprises at least one traction module configured for being connected to a catenary, the power supply system thereby being configured for receiving power supply from the catenary when the traction module is connected to said catenary. The traction module comprises a DC bus connected to the catenary, and a converter configured for adapting the voltage of the DC bus with a first side connected to the DC bus and a second side configured for powering at least one traction motor for driving the train.

The power supply system also comprises an auxiliary load module connected to the DC bus and configured for powering the auxiliary loads of the train when the power supply system is powered from the catenary.

Furthermore, the power supply system comprises a battery configured for powering the pre-selected auxiliary loads and the traction motors for driving the train in the absence of power supply from the catenary.

The auxiliary load module comprises at least one battery charger, the battery charger being connected between the DC bus of the traction module and the battery. The battery charger is configured for charging the battery from the DC bus when the power supply system is powered from the catenary. The battery charger is unidirectional and is configured for only allowing the flow of current from its input to its output, the input being connected to the DC bus and the output being connected to the battery.

The power supply system comprises a support module connected to the battery and to the traction module, and configured for allowing the flow of current from the battery to said traction module in the absence of power supply from the catenary. The support module is connected to the traction module by galvanic insulation means of the power supply system, said galvanic insulation means comprising at least one first winding connected to the traction module and a second winding connected to the support module. The support module comprises at least one DC/AC converter, the DC side of the DC/AC converter being connected to the battery and the AC side of the DC/AC converter being connected to the second winding.

In that sense, the support module offers an alternative and independent path of the battery charger for the flow of current from the battery to the traction module in the absence of power supply from the catenary. Taking into account that the charging power of the battery is less than the discharging power of said battery, having a unidirectional battery charger and an alternative path to the battery charger has the advantage of not having to design an oversized and complex battery charger so that it can work in both directions. Both the battery charger and the support module can therefore be set to the maximum power required in each case, obtaining a more reliable solution. Furthermore, it is a non-invasive solution in the normal operating mode of the train (when the train is powered from the catenary, which will be the mode in which the train will work most of the time), such that it does not affect the reliability of the service offered by the train.

Preferably, the battery used is the battery used by the trains for powering the critical DC loads of the train, and therefore it is not necessary to add a specific battery.

A second aspect of the invention relates to a train comprising a first drive unit at the beginning of the train and a second drive unit at the end of the train, each drive unit comprising a power supply system like the one described for the first aspect of the invention.

These and other advantages and features of the invention will become evident in view of the drawings and detailed description of the invention.

### DESCRIPTION OF THE DRAWINGS

Figure 1 schematically shows a first embodiment of the power supply system of the invention, connected to an AC catenary.
Figure 2 schematically shows the first embodiment of the power supply system of the invention, connected to a DC catenary.
Figure 3 schematically shows a first configuration of the support module of an embodiment of the power supply system of the invention.
Figure 4 schematically shows a second embodiment of the power supply system of the invention.
Figure 5 schematically shows a second configuration of the support module of an embodiment of the power supply system of the invention connected to a support transformer of the power supply system.

### DETAILED DISCLOSURE OF THE INVENTION

The power supply system 1, 1' of the invention is preferably used for powering high-speed electric trains, although it may also be used in any other type of electric train. Furthermore, the power supply system 1, 1' can be configured for being connected to both DC and AC catenaries, or only to AC catenaries, or only to DC catenaries.

The power supply received from the catenary is mainly consumed by the traction motors 9 used for driving the train, and by the auxiliary loads 6 and 7 of the train. Different types of auxiliary loads 6 and 7 can be distinguished in a train, on one hand being AC auxiliary loads 6 and on the other critical DC auxiliary loads 7. When the train is connected to the catenary, preferably all the auxiliary loads 6 and 7 are powered from the catenary. Trains usually tend to have at least one battery 8 for powering the critical DC auxiliary loads 7 of the train so that they are powered even when the train does not receive power supply from the catenary. These critical DC auxiliary loads 7 are those auxiliary loads that are essential for train or passenger safety, such as for example, the control boards, the door opening drivers, and/or emergency systems. In the context of the invention, pre-selected auxiliary loads are defined as the auxiliary loads which are powered in the absence of power supply from the catenary. The pre-selected auxiliary loads will therefore include at least part of the critical DC auxiliary loads 7 and may also include the AC auxiliary loads 6 required for the suitable operation of the train when it is not being powered by the catenary.

The power supply system 1 of the invention comprises at least one traction module 2 configured for being connected to a catenary, the power supply system 1 thereby being configured for receiving power supply from the catenary when the traction module 2 is connected to said catenary.

The traction module 2 comprises a DC bus 21 connected to the catenary, and a converter 20 configured for adapting the voltage of the DC bus 21 with a first side connected to the DC bus and a second side configured for powering at least one traction motor 9 for driving the train.

The power supply system 1 also comprises an auxiliary load module 3 connected to the DC bus 21 and configured for powering the auxiliary loads 6 and 7 of the train when the power supply system 1 is powered from the catenary.

Furthermore, the power supply system 1 comprises a battery 8 configured for powering the pre-selected auxiliary loads and the traction motor 9 in the absence of power supply from the catenary. As mentioned above, the pre-selected auxiliary loads are those auxiliary loads which are powered in the absence of power supply from the catenary, said pre-selected auxiliary loads being at least part of the critical DC auxiliary loads 7 and optionally the AC auxiliary loads 6 required for the suitable operation of the train when it is not being powered by the catenary.

The auxiliary load module 3 comprises at least one battery charger 30 connected between the DC bus 21 of the traction module 2 and the battery 8. The battery charger 30 is configured for charging the battery 8 from the DC bus 21 when the power supply system 1 is powered from the catenary. The battery charger 30 is unidirectional and is configured for only allowing the flow of current from its input to its output, the input being connected to the DC bus 21 and the output being connected to the battery 8, i.e., the battery charger 30 is configured for only allowing the flow of current from the DC bus 21 to the battery 8.

The power supply system 1 comprises a support module 4 or 4' connected to the battery 8 and to the traction module 2, and configured for allowing the flow of current from the battery 8 to said traction module 2 in the absence of power supply from the catenary. Preferably, said support module 4 or 4' is unidirectional. The support module 4 or 4' is connected to the traction module 2 by galvanic insulation means of the power supply system 1, said galvanic insulation means comprising at least one first winding 11, 14 or 43' connected to the traction module 2 and a second winding 12 or 42' connected to the support module 4 or 4'.

The support module 4 or 4' therefore offers an alternative and independent path of the battery charger 30 for the flow of current from the battery 8 to the traction module 2, in the absence of power supply from the catenary. Taking into account that the charging power of the battery 8 is less than the discharging power of said battery 8, having a unidirectional battery charger 30 and an alternative path to the battery charger 30 by means of the support module 4 or 4' offers the advantage of not having to design an oversized and complex battery charger 30 so that it can work in both directions. Both the battery charger 30 and the support module 4 or 4' can therefore be set to the maximum power required in each case, obtaining a more reliable solution. Furthermore, it is a non-invasive solution in the normal operating mode of the train, i.e., when the train is powered from the catenary, which will be the mode in which the train will work most of the time, such that it does not affect the reliability of the service offered by the train.

Preferably the battery 8 used is the battery used by the trains for powering the critical DC loads 7 of the train, and therefore it is not necessary to add a specific battery.

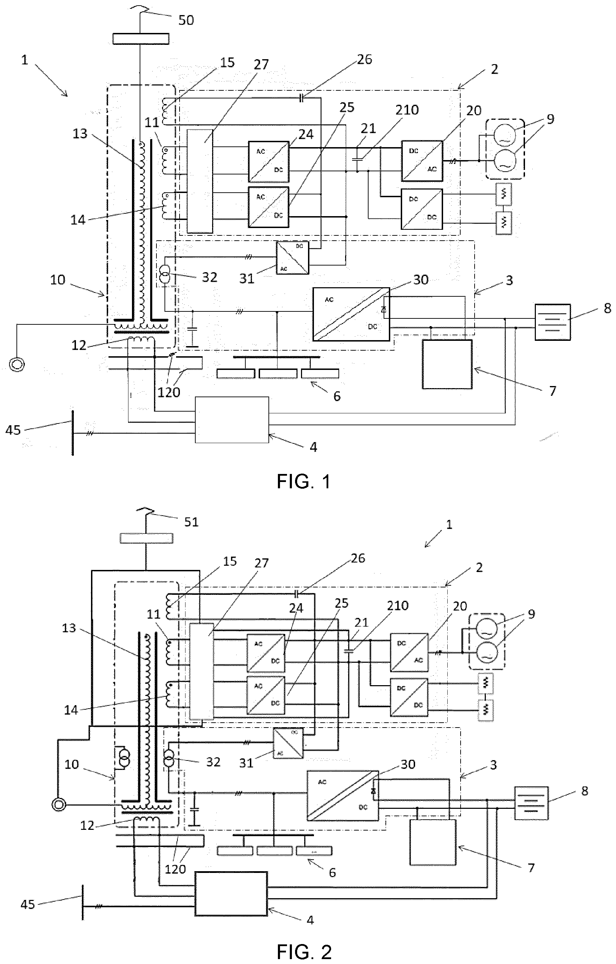

Figures 1 and 2 schematically show a first embodiment of the power supply system 1 of the invention. The power supply system 1 of this first embodiment is configured for being arranged in a multivoltage train, which are those trains that can be connected both to an AC catenary and to a DC catenary.

In the first embodiment, the power supply system 1 comprises a traction module 2 configured for being connected to a catenary (not depicted in the drawings), the power supply system 1 thereby being configured for receiving power supply from the catenary when the traction module 2 is connected to said catenary.

In the context of the invention, when an element is said to be connected to another element, it refers to the fact that said elements are electrically connected. Said connection does not have to be a direct electrical connection, i.e., there can be intermediate elements between both elements.

In the first embodiment of the power supply system 1, the traction module 2 comprises a DC bus 21 connected to the catenary and a converter 20 configured for adapting the voltage of the DC bus 21. The converter 20 comprises a first side connected to the DC bus 21 and a second side configured for powering two traction motors 9 for driving the train.

In this first embodiment of the power supply system 1, the traction motors 9 are AC motors and therefore said converter 20 of the traction module is a AC/DC converter, the AC side of which is configured for powering the two traction motors 9 for driving the train, the DC bus 21 being connected to the DC side of said converter 20 DC/AC.

In other possible embodiments (not shown in the drawings), the traction motors can be DC motors. In these cases, the converter will be a DC/DC converter.

In other possible embodiments, the power supply system may comprise several traction modules. Furthermore, in other possible embodiments each traction module can power a single traction motor or more than two traction motors.

In the first embodiment, the power supply system 1 also comprises an auxiliary load module 3 connected to the DC bus 21. The auxiliary load module 3 is configured for powering the auxiliary loads 6 and 7 of the train when the power supply system 1 is powered from the catenary.

Furthermore, the first embodiment of the power supply system 1 comprises a battery 8 configured for powering the pre-selected auxiliary loads and the traction motors 9 in the absence of power supply from the catenary.

In this first embodiment, the auxiliary load module 3 comprises a battery charger 30 connected between the DC bus 21 of the traction module 2 and the battery 8. The battery charger 30 is configured for charging the battery 8 from the DC bus 21 when the power supply system 1 is powered from the catenary. Preferably, the critical DC auxiliary loads 7 are powered also through the battery charger 30 when the power supply system 1 is powered from the catenary.

In other possible embodiments in which the power supply system comprises several traction modules, each of said traction modules can have associated therewith a battery charger, each battery charger being connected between the DC bus of the respective traction module and the battery. In other possible embodiments in which, for example, the power requirements are lower, it may not be necessary for there to be a battery charger for each traction module. In these cases, several traction modules may be associated with one and the same charger by means of a contactor, where the traction module to which the battery charger is connected can be alternated. Furthermore, in other possible embodiments the power supply system may comprise one or more traction modules which are not associated with an auxiliary load module, its only objective being to power one or more traction motors for driving the train.

The battery charger 30 is unidirectional and is configured for only allowing the flow of current from its input to its output. The input of the battery charger 30 is connected to the DC bus 21, whereas the output of the battery charger 30 is connected to the battery 8. The power supply system 1 is configured for allowing said flow of current that reaches the battery 8 from the DC bus 21 through the battery charger 30 only when the power supply system 1 is powered from the catenary. When the power supply system 1 is not powered from the catenary, the flow of current between the DC bus 21 and the battery 8 is interrupted, and therefore the battery charger 30 does not receive power supply from the DC bus 21.

In some embodiments (not shown in the drawings), the battery charger may have the possibility of being connected to an outer plug for charging the battery, for example by connecting the battery charger to an outer plug of a garage or a workshop.

In the first embodiment of the power supply system 1, the auxiliary load module 3 comprises a DC/AC converter 31 the DC side of which is connected to the DC bus 21 and the AC side of which provides a three-phase output which is connected to the primary of an auxiliary transformer 32. The secondary of the auxiliary transformer 32 provides a three-phase output which is connected to the AC auxiliary loads 6 and to the input of the battery charger 30. Preferably, the three-phase output of the secondary of the auxiliary transformer 32 is 400 Vac to 50 Hz. In other possible embodiments, the connection between the DC bus and the battery charger may have other configurations.

In this first embodiment of the power supply system 1, the battery charger 30 of the auxiliary load module 3 is an AC/DC converter with galvanic insulation, with the AC side corresponding with the input of the battery charger 30 and the DC side with the output of the battery charger 30.

This first embodiment of the power supply system 1 also comprises a support module 4 connected to the battery 8 and to the traction module 2, and configured for allowing the flow of current from the battery 8 to said traction module 2 in the absence of power supply from the catenary. Preferably, said support module 4 is unidirectional.

The energy stored in the battery 8 can therefore be used not only for powering the critical DC auxiliary loads 7 of the train but also to enable moving the train by short distances in the absence of power supply from the catenary. The logistics for moving the train in workshops in which the train has no access to the catenary is thereby facilitated, for example, or it allows the train to able to autonomously leave an area in which there is no catenary, also known in the sector as a neutral area. Furthermore, preferably, the energy stored in the battery 8 commonly included in trains is used to that end for powering the critical DC auxiliary loads 7 of the train in the absence of power supply from the catenary, i.e., a specific support battery does not have to be added, saving space and weight.

The support module 4 of the first embodiment of the power supply system 1 is connected to the traction module 2 by galvanic insulation means of the power supply system 1, said galvanic insulation means comprising at least one first winding 11 and 14 connected to the traction module 2 and a second winding 12 connected to the support module 4. In this first embodiment, the galvanic insulation means of the power supply system 1 comprise a first winding 11 and a first additional winding 14 connected to the traction module 2.

This first embodiment of the power supply system 1 is configured for being arranged in a multivoltage train. To that end, the train comprises an AC pantograph 50 configured for being connected to an AC catenary and a DC pantograph 51 configured for being connected to a DC catenary. Figure 1 shows the configuration of the power supply system 1 for being connected to an AC catenary, whereas Figure 2 shows the configuration of the power supply system 1 for being connected to a DC catenary.

The power supply system 1 of the first embodiment comprises a traction transformer 10 configured for lowering the high voltage when the power supply system 1 is connected to an AC catenary. The traction transformer 10 comprises a primary winding 13 configured for being connected to the AC pantograph 50. The traction transformer 10 also comprises a pair of secondary windings configured for being connected to the traction module 2, said secondary windings being the first winding 11 and the first additional winding 14 of the aforementioned galvanic insulation means of the power supply system 1, whereby the support module 4 is connected to the traction module 2. The number of secondary windings connected to the traction module 2 depends on different factors, such as for example, the required power, harmonics compliance, or any other factor known by one skilled in the art.

In this first embodiment of the power supply system 1, the traction transformer 10 also comprises a secondary linearization winding connected to the support module 4, said secondary linearization winding being the second winding 12 of the aforementioned galvanic insulation means of the power supply system 1, whereby the support module 4 is connected to the traction module 2. The linearization winding is a winding which may comprise the traction transformers of the multivoltage trains which are used for adapting the power supply system 1 depending on the type of catenary to which the train is connected. The power supply system 1 comprises a switch 120 arranged in parallel to the second winding 12 (which performs the function of a secondary linearization winding, as explained above) to enable adapting the power supply system 1 to the type of catenary to which it is connected. Therefore, when the train is connected to an AC catenary (configuration shown in Figure 1), the switch 120 is open, whereas when the train is connected to a DC catenary (configuration shown in Figure 2), the switch 120 is closed, as shown in Figure 2, short-circuiting the terminals of the second winding 12. A winding present in the traction transformer 10 can thus be used and re-used, without having to add an additional transformer to enable connecting the support module 4 to the traction module 2. Since the battery 8 is galvanically insulated from the DC bus 21, a safe solution is provided, since in the event that the battery is connected to the DC bus without galvanic insulation, a very high reliability and safety preventing any direct connection incident between the DC bus and the battery due to the failure of an element would be required.

In this first embodiment of the power supply system 1, the traction module 2 comprises an AC/DC converter 24, the AC side of this AC/DC converter 24 being connected to the first winding 11 and the DC side connected to the DC bus 21 of the traction module 2. Therefore, when the train is connected to an AC catenary, current circulates from the first winding 11 to the DC bus 21 through said AC/DC converter 24. In this first embodiment of the power supply system 1, the traction module 2 comprises an additional AC/DC converter 25, the AC side of said additional AC/DC converter 25 being connected to the first additional winding 14 and the DC side connected to the DC bus 21 of the traction module 2.

Figure 2 shows the configuration of the power supply system 1 when it is connected to a DC catenary. In that case, the first winding 11 and the first additional winding 14 act as inductance between the DC catenary and the capacitor 210 of the DC bus 21, such that an additional inductance is not required, utilizing rather the inductance of said windings 11 and 14 of the traction transformer 10. For the value of the inductance provided by the first winding 11 and the first additional winding 14 to be constant in the entire range of operation, the second winding 12 (which, as mentioned above, plays the role of a linearization winding) must be short-circuited. As seen in Figure 2, the first winding 11 and the first additional winding 14 are directly connected to the DC bus 21 by means of insulators and contactors 27, such that the current does not have to go through the AC/DC converter 24 and the additional AC/DC converter 25 which remain OFF when the power supply system 1 is powered from a DC catenary.

In this first embodiment of the power supply system 1, the traction module 2 comprises a inductance 15 and a capacitor 26 forming a LC filter connected to the DC bus 21, the LC filter being in charge of filtering the pulsating power generated in the power supply system 1, which is normally 100 Hz.

As explained above, in multivoltage trains in which the traction transformer does not comprise a linearization winding, the support module may comprise a specific transformer providing the necessary galvanic insulation to connect the support module to the traction module.

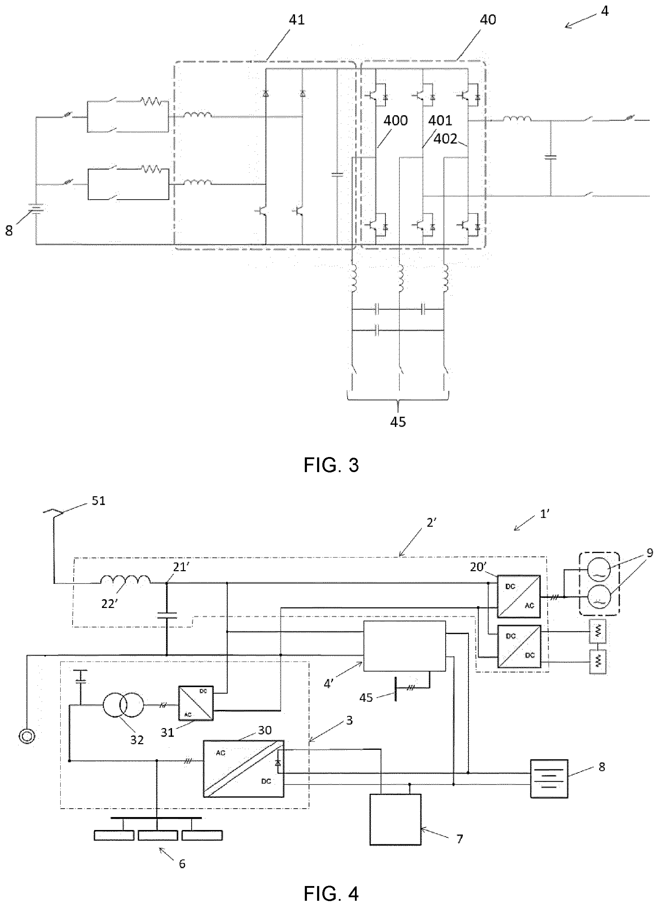

Figure 3 shows a first configuration of the support module 4, the power supply system 1 of the first embodiment preferably comprising a support module 4 of this type.

The support module 4 of Figure 3 comprises a DC/AC converter 40, the DC side of the DC/AC converter 40 being connected to the battery 8, and the AC side of the DC/AC converter 40 being connected to the second winding 12.

Furthermore, in this first configuration the support module 4 also comprises a three-phase current output 45 connected to the AC side of the DC/AC converter 40 and configured for directly powering the AC auxiliary loads 6 required in the absence of power supply from the catenary. The energy stored in the battery 8 can therefore additionally be used for powering the traction motors 9 driving the train and powering the critical DC auxiliary loads 7, for powering the AC auxiliary loads 6 required for the suitable operation of the train when it is working powered by the support module 4, i.e., the energy stored in the battery 8 can be used for powering the traction motors 9 driving the train and powering the pre-selected auxiliary loads when the train is working powered by the support module 4. These required AC auxiliary loads 6 may be, for example, the cooling system of the traction converter or the fans of the traction motors and other minimum elements that are deemed necessary to connect during operation.

In this first configuration of the support module 4, the DC/AC converter 40 is a three-phase DC/AC converter with three parallel electric branches 400, 401 and 402, two electric branches 401 and 402 of said DC/AC converter 40 being connected to a respective terminal of the second winding 12, the three-phase current output 45 comprising a respective connection to each of the three electric branches 400, 401 and 402 of the DC/AC converter 40. Therefore, with a single DC/AC converter 40, both the single-phase output required for connecting to the second winding 12, and the three-phase current output 45 required for powering the AC auxiliary loads 6 required, are obtained, reducing the number of components required for manufacturing the support module 4. In other possible embodiments not shown in the drawings, the support module may comprise a single-phase DC/AC converter connected between the battery and the second winding, and a three-phase DC/AC converter between the battery and the required AC auxiliary loads.

The first configuration of the support module 4 also comprises a boost converter 41 connected between the battery 8 and the DC/AC converter 40 and that is configured for adapting the DC voltage provided by the battery 8 to the value which allows generating the voltage required for the suitable operation of the power supply system 1. The boost converter 41 can have one or more booster steps depending on the requirements of each case.

Figure 4 shows a second embodiment of the power supply system 1' of the invention.

The second embodiment of the power supply system 1' differs from the first embodiment of the power supply system 1 in that it is a power supply system 1' configured for being connected only to DC catenaries. The features and configuration of the auxiliary module 3, the battery 8, and the auxiliary loads 6 and 7 of the second embodiment of the power supply system 1' are similar to those of the first embodiment of the power supply system 1, and therefore it is not considered necessary to describe them again.

The second embodiment of the power supply system 1' comprises a traction module 2' configured for being connected to a DC catenary, the power supply system 1' thereby being configured for receiving power supply from the catenary when the traction module 2' is connected to said catenary. The traction module 2' is configured for powering two traction motors 9 for driving the train.

In this second embodiment of the power supply system 1', the traction module 2' comprises a DC bus 21' connected to the catenary, and a converter 20' configured for adapting the voltage of the DC bus 21'. The converter 20' comprises a first side connected to the DC bus 21' and a second side configured for powering two traction motors 9 for driving the train. The DC bus 21' of the traction module 2' is connected to the catenary by means of an input filter 22'.

In this second embodiment of the power supply system 1', the traction motors 9 are AC motors, and therefore the converter 20' of the traction module 2' is a DC/AC converter, the AC side of which is configured for powering the two traction motors 9 for driving the train, the DC bus 21' being connected to the DC side of said converter 20' DC/AC.

In other possible embodiments (not shown in the drawings), the traction motors can be DC motors. In these cases, the converter will be a DC/DC converter.

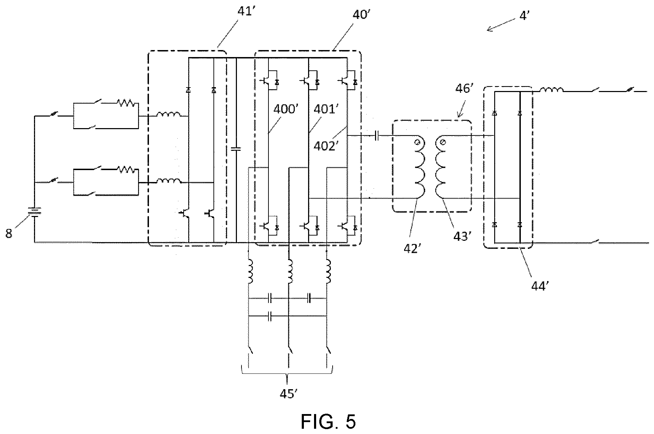

Preferably, the power supply system 1' of this second embodiment comprises a support module 4' like the one shown in Figure 5.

Figure 5 shows a second configuration of the support module 4'. This second configuration of the support module 4' is preferably used in the event that the power supply system in which said support module 4' is incorporated lacks a secondary linearization winding due to the fact that it is a power supply system configured for being connected to a DC catenary and therefore does not have any traction transformer, like the case of the second embodiment of the power supply system 1', or due to the fact that, although is it a power supply system that indeed comprises a traction transformer, the latter lacks a linearization winding.

The second configuration of the support module 4' is distinguished from the first configuration of the support module 4 in that it incorporates a support transformer 46', said support transformer 46' being the galvanic insulation means of the power supply system 1'. Therefore, the primary of the support transformer 46' is the second winding 42' of the galvanic insulation means of the power supply system 1' and the secondary of the support transformer 46' is the first winding 43' of the galvanic insulation means of the power supply system 1'. The support module 4' comprises an AC/DC converter 44', the AC side being connected to the first winding 43' and the DC side connected to the DC bus 21' of the traction module 2'.

The second configuration of the support module 4' comprises a DC/AC converter 40', the DC side of the DC/AC converter 40' being connected to the battery 8, and the AC side of the DC/AC converter 40' being connected to the second winding 42'.

The second configuration of the support module 4' also comprises a three-phase current output 45' connected to the AC side of the DC/AC converter 40' and configured for directly powering the AC auxiliary loads 6 required in the absence of power supply from the catenary. In this second configuration of the support module 4', the DC/AC converter 40' is a three-phase DC/AC converter with three parallel electric branches 400', 401' and 402', two electric branches 401' and 402' of said DC/AC converter 40' being connected to a respective terminal of the second winding 42', the three-phase current output 45' comprising a respective connection to each of the three electric branches 400', 401' and 402' of the DC/AC converter 40'. Therefore, with a single DC/AC converter 40', both the single-phase output required for connecting to the second winding 42', and the three-phase output required for powering the required AC auxiliary loads 6, are obtained, reducing the number of components required for manufacturing the support module 4'. In other possible embodiments not shown in the drawings, the support module may comprise a single-phase DC/AC converter connected between the battery and the second winding, and a DC/AC converter between the battery and the required AC auxiliary loads.

In this second configuration, the support module 4' also comprises a boost converter 41' connected between the battery 8 and the DC/AC converter 40'.

A third embodiment of the power supply system (not shown in the drawings) comprises two traction modules, each traction module being configured for powering at least one traction motor for driving the train. The power supply system comprises a support module connected to both traction modules and an auxiliary load module comprising a battery charger for each traction module, both battery chargers being connected to the battery.

The invention also relates to an electric train comprising a first drive unit at the beginning of the train and a second drive unit at the end of the train, each drive unit comprising a power supply system according to any of the embodiments described above.

## Claims

1. Power supply system for an electric train, comprising
• at least one traction module (2) configured for being connected to a catenary, the power supply system (1) thereby being configured for receiving power supply from the catenary when the traction module (2) is connected to said catenary, said traction module (2) comprising
∘ a DC bus (21) connected to the catenary, and
∘ a converter (20) configured for adapting the voltage of the DC bus (21) with a first side connected to the DC bus and a second side configured for powering at least one traction motor (9) for driving the train,
• an auxiliary load module (3) connected to the DC bus (21) and configured for powering auxiliary loads (6, 7) of the train when the power supply system (1) is powered from the catenary, and
• a battery (8) configured for powering pre-selected auxiliary loads and the traction motor (9) in the absence of power supply from the catenary,
the auxiliary load module (3) comprising at least one battery charger (30), the battery charger (30) being connected between the DC bus (21) of the traction module (2) and the battery (8), and configured for charging the battery (8) from the DC bus (21) when the power supply system (1) is powered from the catenary,
**characterized in that**
the battery charger (30) is unidirectional and is configured for only allowing the flow of current from its input to its output, the input being connected to the DC bus (21) and the output being connected to the battery (8),
the power supply system (1) comprising a support module (4, 4') connected to the battery (8) and to the traction module (2), and configured for allowing the flow of current from the battery (8) to said traction module (2) in the absence of power supply from the catenary, the support module (4, 4') comprising at least one DC/AC converter (40, 40'), the DC side of the DC/AC converter (40, 40') being connected to the battery (8) and the AC side of the DC/AC converter (40, 40') being connected to the traction module (2) by galvanic insulation means of the power supply system (1), said galvanic insulation means comprising at least one first winding (11, 14, 43') connected to the traction module (2) and a second winding (12, 42') connected to the AC side of the DC/AC converter (40, 40').

2. Power supply system according to claim 1, wherein the support module (4, 4') also comprises a three-phase current output (45, 45') connected to the AC side of the DC/AC converter (40, 40') and configured for powering the AC auxiliary loads (7) required in the absence of power supply from the catenary.

3. Power supply system according to claim 2, wherein the DC/AC converter (40, 40') of the support module (4, 4') is a three-phase DC/AC converter with three parallel electric branches, two electric branches of said DC/AC converter (40, 40') being connected to a respective terminal of the second winding (12, 42'), the three-phase current output (45, 45') comprising a respective connection to each of the three electric branches of the DC/AC converter (40, 40').

4. Power supply system according to any of claims 1 to 3, wherein the support module (4, 4') comprises a boost converter (41, 41') connected between the battery (8) and the DC/AC converter (40, 40').

5. Power supply system according to any of the preceding claims, comprising a traction transformer (10) for the connection thereof to the catenary and for reducing the high voltage of the catenary, said traction transformer (10) comprising a primary winding configured for being connected to the catenary and at least one secondary winding for being connected to the traction module (2), said secondary winding being the first winding (11, 14) of the galvanic insulation means of the power supply system (1), and the traction transformer (10) comprising a secondary linearization winding connected to the support module (4, 4'), said secondary linearization winding being the second winding (12) of said galvanic insulation means, the traction module (2) comprising a AC/DC converter (24) connected between the first winding (11, 14) and the DC bus (21) of the traction module (2).

6. Power supply system according to any of the claims 1 to 4, wherein the support module (4') comprises a support transformer (46'), said support transformer (46') being the galvanic insulation means of the power supply system (1'), such that the primary of the support transformer (46') is the second winding (42') of the galvanic insulation means of the power supply system (1') and the secondary of said support transformer (46') is the first winding (43') of said galvanic insulation means, the support module (4') comprising a AC/DC converter (44'), the AC side of said AC/DC converter (44') being connected to the first winding (43') and the DC side of said AC/DC converter (44') being connected to the DC bus (21') of the traction module (2').

7. Power supply system according to any of the preceding claims, comprising two traction modules (2), each traction module (2) being configured for powering at least one traction motor (9) for driving the train, the support module (4, 4') being connected to both traction modules (2) and the auxiliary load module (3) comprising a battery charger (30) for each traction module (2), both battery chargers (30) being connected to the battery (8).

8. Electric train comprising a first drive unit at the beginning of the train and a second drive unit at the end of the train, each drive unit comprising a power supply system (1) according to any of claims 1 to 7.

## Patentansprüche

1. Stromversorgungssystem für einen elektrischen Zug, umfassend
• mindestens ein Traktionsmodul (2), welches dazu ausgebildet ist, an eine Oberleitung angeschlossen zu werden, wobei dadurch das Stromversorgungssystem (1) dazu ausgebildet ist, eine Stromversorgung aus der Oberleitung zu bekommen, wenn das Traktionsmodul (2) an die genannte Oberleitung angeschlossen ist, wobei das genannte Traktionsmodul (2) Folgendes umfasst
∘ eine Gleichstromsammelschiene (21), welche an die Oberleitung angeschlossen ist, und
∘ einen Wandler (20), welcher dazu ausgebildet ist, die Spannung der Gleichstromsammelschiene (21) anzupassen, mit einer ersten Seite, welche an die Gleichstromsammelschiene angeschlossen ist, und einer zweiten Seite, welche dazu ausgebildet ist, mindestens einen Traktionsmotor (9) mit Strom zu versorgen, um den Zug anzutreiben,
• ein Nebenverbrauchermodul (3), welches an die Gleichstromsammelschiene (21) angeschlossen ist und dazu ausgebildet ist, Nebenverbraucher (6, 7) des Zuges mit Strom zu versorgen, wenn das Stromversorgungssystem (1) aus der Oberleitung mit Strom versorgt wird, und
• eine Batterie (8), welche dazu ausgebildet ist, vorgewählte Nebenverbraucher und den Traktionsmotor (9) in Abwesenheit von Stromversorgung aus der Oberleitung mit Strom zu versorgen,
wobei das Nebenverbrauchermodul (3) mindestens ein Batterieladegerät (30) umfasst, wobei das Batterieladegerät (30) zwischen der Gleichstromsammelschiene (21) des Traktionsmoduls (2) und der Batterie (8) angeschlossen ist, und dazu ausgebildet ist, die Batterie (8) von der Gleichstromsammelschiene (21) aus aufzuladen, wenn das Stromversorgungssystem (1) aus der Oberleitung mit Strom versorgt wird,
**dadurch gekennzeichnet, dass** das Batterieladegerät (30) unidirektional ist und dazu ausgebildet ist, nur den Stromverlauf von dessen Eingang zu dessen Ausgang zu erlauben, wobei der Eingang an die Gleichstromsammelschiene (21) angeschlossen ist und der Ausgang an die Batterie (8) angeschlossen ist,
wobei das Stromversorgungssystem (1) ein Unterstützungsmodul (4, 4') umfasst, welches an die Batterie (8) und an das Traktionsmodul (2) angeschlossen ist, und dazu ausgebildet ist, den Stromverlauf von der Batterie (8) zum genannten Traktionsmodul (2) in Abwesenheit von Stromversorgung aus der Oberleitung zu erlauben, wobei das Unterstützungsmodul (4, 4') mindestens einen Gleichstrom/Wechselstrom-Wandler (40, 40') umfasst, wobei die Gleichstrom-Seite des Gleichstrom/Wechselstrom-Wandlers (40, 40') an die Batterie (8) und die Wechselstrom-Seite des Gleichstrom/Wechselstrom-Wandlers (40, 40') an das Traktionsmodul (2) durch galvanische Isolierungsmittel des Stromversorgungssystems (1) angeschlossen ist, wobei die genannten galvanischen Isolierungsmittel mindestens eine erste Wicklung (11, 14, 43'), welche an das Traktionsmodul (2) angeschlossen ist, und eine zweite Wicklung (12, 42'), welche an die Wechselstrom-Seite des Gleichstrom/Wechselstrom-Wandlers (40, 40') angeschlossen ist, umfassen.

2. Stromversorgungssystem nach Anspruch 1, wobei das Unterstützungsmodul (4, 4') auch einen dreiphasigen Stromausgang (45, 45') umfasst, welcher an die Wechselstrom-Seite des Gleichstrom/Wechselstrom-Wandlers (40, 40') angeschlossen ist und dazu ausgebildet ist, die Wechselstrom-Nebenverbraucher (7), welche in Abwesenheit von Stromversorgung aus der Oberleitung benötigt werden, mit Strom zu versorgen.

3. Stromversorgungssystem nach Anspruch 2, wobei der Gleichstrom/Wechselstrom-Wandler (40, 40') des Unterstützungsmoduls (4, 4') ein dreiphasige Gleichstrom/Wechselstrom-Wandler mit drei parallelen elektrischen Zweigen ist, wobei zwei elektrische Zweige des genannten Gleichstrom/Wechselstrom-Wandlers (40, 40') an eine jeweilige Klemme der zweiten Wicklung (12, 42') angeschlossen sind, wobei der dreiphasige Stromausgang (45, 45') einen jeweiligen Anschluss an jeden der drei elektrischen Zweige des Gleichstrom/Wechselstrom-Wandlers (40, 40') umfasst.

4. Stromversorgungssystem nach einem der Ansprüche 1 bis 3, wobei das Unterstützungsmodul (4, 4') einen Aufwärtswandler (41, 41') umfasst, welcher zwischen der Batterie (8) und dem Gleichstrom/Wechselstrom-Wandler (40, 40') angeschlossen ist.

5. Stromversorgungssystem nach einem der vorhergehenden Ansprüche, umfassend einen Traktionstransformator (10) für den Anschluss desselben an die Oberleitung und zum Verringern der Hochspannung der Oberleitung, wobei der genannte Traktionstransformator (10) eine Primärwicklung, welche dazu ausgebildet ist, an die Oberleitung angeschlossen zu werden, und mindestens eine Sekundärwicklung für deren Anschluss an das Traktionsmodul (2) umfasst, wobei die genannte Sekundärwicklung die erste Wicklung (11, 14) der galvanischen Isolierungsmittel des Stromversorgungssystems (1) ist, und wobei der Traktionstransformator (10) eine an das Unterstützungsmodul (4, 4') angeschlossene sekundäre Linearisierungswicklung umfasst, wobei die genannte sekundäre Linearisierungswicklung die zweite Wicklung (12) der genannten galvanischen Isolierungsmittel ist, wobei das Traktionsmodul (2) einen Wechselstrom/Gleichstrom-Wandler (24) umfasst, welcher zwischen der ersten Wicklung (11, 14) und der Gleichstromsammelschiene (21) des Traktionsmoduls (2) angeschlossen ist.

6. Stromversorgungssystem nach einem der Ansprüche 1 bis 4, wobei das Unterstützungsmodul (4') einen Unterstützungstransformator (46') umfasst, wobei der genannte Unterstützungstransformator (46') die galvanischen Isolierungsmittel des Stromversorgungssystems (1') ist, sodass die primäre des Unterstützungstransformators (46') die zweite Wicklung (42') der galvanischen Isolierungsmittel des Stromversorgungssystems (1') ist und die sekundäre des genannten Unterstützungstransformators (46') die erste Wicklung (43') der genannten galvanischen Isolierungsmittel ist, wobei das Unterstützungsmodul (4') einen Wechselstrom/Gleichstrom-Wandler (44') umfasst, wobei die Wechselstrom-Seite des genannten Wechselstrom/Gleichstrom-Wandlers (44') and die erste Wicklung (43') angeschlossen ist und die Gleichstrom-Seite des genannten Wechselstrom/Gleichstrom-Wandlers (44') an die Gleichstromsammelschiene (21') des Traktionsmoduls (2') angeschlossen ist.

7. Stromversorgungssystem nach einem der vorhergehenden Ansprüche, umfassend zwei Traktionsmodule (2), wobei jedes Traktionsmodul (2) dazu ausgebildet ist, mindestens einen Traktionsmotor (9) zum Antreiben des Zuges mit Strom zu versorgen, wobei das Unterstützungsmodul (4, 4') an beide Traktionsmodule (2) angeschlossen ist und wobei das Nebenverbrauchermodul (3) ein Batterieladegerät (30) für jedes Traktionsmodul (2) umfasst, wobei beide Batterieladegeräte (30) an die Batterie (8) angeschlossen sind.

8. Elektrischer Zug umfassend eine erste Antriebseinheit am Anfang des Zuges und eine zweite Antriebseinheit am Ende des Zuges, wobei jede Antriebseinheit ein Stromversorgungssystem (1) nach einem der Ansprüche 1 bis 7 umfasst.

## Revendications

1. Système d'alimentation pour un train électrique, comprenant
• au moins un module de traction (2) configuré pour être connecté à une caténaire, le système d'alimentation (1) étant ainsi configuré pour recevoir une alimentation depuis la caténaire lorsque le module de traction (2) est connecté à ladite caténaire, ledit module de traction (2) comprenant
∘ un bus de CC (21) connecté à la caténaire, et
∘ un convertisseur (20) configuré pour adapter la tension du bus de CC (21) avec un premier côté connecté au bus de CC et un deuxième côté configuré pour alimenter au moins un moteur de traction (9) pour entraîner le train,
• un module de charge auxiliaire (3) connecté au bus de CC (21) et configuré pour alimenter des charges auxiliaires (6, 7) du train lorsque le système d'alimentation (1) est alimenté par la caténaire, et
• une batterie (8) configurée pour alimenter des charges auxiliaires présélectionnées et le moteur de traction (9) en l'absence d'alimentation depuis la caténaire,
le module de charge auxiliaire (3) comprenant au moins un chargeur de batterie (30), le chargeur de batterie (30) étant connecté entre le bus de CC (21) du module de traction (2) et la batterie (8), et configuré pour charger la batterie (8) depuis le bus de CC (21) lorsque le système d'alimentation (1) est alimenté depuis la caténaire,
**caractérisé en ce que** le chargeur de batterie (30) est unidirectionnel et est configuré pour permettre uniquement le flux du courant depuis son entrée jusqu'à sa sortie, l'entrée étant connectée au bus de CC (21) et la sortie étant connectée à la batterie (8),
le système d'alimentation (1) comprenant un module de support (4, 4') connecté à la batterie (8) et au module de traction (2), et configuré pour permettre le flux du courant depuis la batterie (8) jusqu'audit module de traction (2) en l'absence d'alimentation depuis la caténaire, le module de support (4, 4') comprenant au moins un convertisseur CC/CA (40, 40'), le côté CC du convertisseur CC/CA (40, 40') étant connecté à la batterie (8) et le côté CA du convertisseur CC/CA (40, 40') étant connecté au module de traction (2) par des moyens d'isolation galvanique du système d'alimentation (1), lesdits moyens d'isolation galvanique comprenant au moins un premier bobinage (11, 14, 43') connecté au module de traction (2) et un deuxième bobinage (12, 42') connecté au côté CA du convertisseur CC/CA (40, 40').

2. Système d'alimentation selon la revendication 1, dans lequel le module de support (4, 4') comprend en outre une sortie de courant triphasé (45, 45') connectée au côté CA du convertisseur CC/CA (40, 40') et configurée pour alimenter les charges auxiliaires CA (7) requises en l'absence d'alimentation depuis la caténaire.

3. Système d'alimentation selon la revendication 2, dans lequel le convertisseur CC/CA (40, 40') du module de support (4, 4') est un convertisseur CC/CA triphasé avec trois branches électriques parallèles, deux branches électriques dudit convertisseur CC/CA (40, 40') étant connectées à un terminal respectif du deuxième bobinage (12, 42'), la sortie de courant triphasé (45, 45') comprenant une connexion respective à chacune des trois branches électriques du convertisseur CC/CA (40, 40').

4. Système d'alimentation selon l'une quelconque des revendications 1 à 3, dans lequel le module de support (4, 4') comprend un convertisseur élévateur (41, 41') connecté entre la batterie (8) et le convertisseur CC/CA (40, 40').

5. Système d'alimentation selon l'une quelconque des revendications précédentes, comprenant un transformateur de traction (10) pour la connexion de celui-ci à la caténaire et pour réduire la haute tension de la caténaire, ledit transformateur de traction (10) comprenant un bobinage primaire configuré pour être connecté à la caténaire et au moins un bobinage secondaire pour être connecté au module de traction (2), ledit bobinage secondaire étant le premier bobinage (11, 14) des moyens d'isolation galvanique du système d'alimentation (1), et le transformateur de traction (10) comprenant un bobinage secondaire de linéarisation connecté au module de support (4, 4'), ledit bobinage secondaire de linéarisation étant le deuxième bobinage (12) desdits moyens d'isolation galvanique, le module de traction (2) comprenant un convertisseur CA/CC (24) connecté entre le premier bobinage (11, 14) et le bus de CC (21) du module de traction (2).

6. Système d'alimentation selon l'une quelconque des revendications 1 à 4, dans lequel le module de support (4') comprend un transformateur de support (46'), ledit transformateur de support (46') étant les moyens d'isolation galvanique du système d'alimentation (1'), de sorte que le primaire du transformateur de support (46') est le deuxième bobinage (42') des moyens d'isolation galvanique du système d'alimentation (1') et le secondaire dudit transformateur de support (46') est le premier bobinage (43') desdits moyens d'isolation galvanique, le module de support (4') comprenant un convertisseur CA/CC (44'), le côté CA dudit convertisseur CA/CC (44') étant connecté au premier bobinage (43') et le côté CC dudit convertisseur CA/CC (44') étant connecté au bus de CC (21') du module de traction (2').

7. Système d'alimentation selon l'une quelconque des revendications précédentes, comprenant deux modules de traction (2), chaque module de traction (2) étant configuré pour alimenter au moins un moteur de traction (9) pour entraîner le train, le module de support (4, 4') étant connecté aux deux modules de traction (2) et le module de charge auxiliaire (3) comprenant un chargeur de batterie (30) pour chaque module de traction (2), les deux chargeurs de batterie (30) étant connectés à la batterie (8).

8. Train électrique comprenant une première unité d'entraînement au début du train et une deuxième unité d'entraînement à la fin du train, chaque unité d'entraînement comprenant un système d'alimentation (1) selon l'une quelconque des revendications 1 à 7.
